# EUROPEAN PATENT SPECIFICATION

(11) **EP 2 644 428 B1**
(45) Date of publication and mention of the grant of the patent: **24.09.2014**
(21) Application number: 13161021.4
(22) Date of filing: 26.03.2013
(51) Int. Cl.: B60K 17/35, F16D 13/52, F16D 28/00

(54) **Driving force transmission apparatus, and four-wheel-drive vehicle including the driving force transmission apparatus**
Antriebskraft-Übertragungsvorrichtung und Fahrzeug mit Vierradantrieb mit der Antriebskraft-Übertragungsvorrichtung
Appareil de transmission de force d'entraînement et véhicule à quatre roues motrices comportant l'appareil de transmission de force d'entraînement

(30) Priority: 28.03.2012 JP 2012074611
(43) Date of publication of application: 02.10.2013
(73) Proprietor: JTEKT CORPORATION, Osaka-shi Osaka 542-8502 (JP)
(72) Inventor: Fujii, Noriyuki, Osaka-shi,, Osaka 542-8502 (JP); Kitamura, Katsushi, Osaka-shi,, Osaka 542-8502 (JP); Suzuki, Kunihiko, Osaka-shi,, Osaka 542-8502 (JP); Takai, Tomoyoshi, Osaka-shi,, Osaka 542-8502 (JP)
(74) Representative: TBK

(56) References cited:
- DE-A1-102008 011 910
- US-A1- 2004 116 230
- US-A1- 2004 188 216
- US-A1- 2010 222 175
- US-A1- 2011 011 203

## Description

The invention relates to a driving force transmission apparatus according to the preamble of claim 1, the features of which are known from document US 2010/0222175 A1, that transmits driving force from an input shaft to an output shaft, and a four-wheel-drive vehicle that includes the driving force transmission apparatus.

There is a conventional driving force transmission apparatus that is mounted in, for example, a four-wheel-drive vehicle and in which a pair of rotary members are coupled to each other by a clutch such that torque is transmittable therebetween (see, for example, Japanese Patent Application Publication No. 2007-78134 (JP 2007-078134 A)).

The driving force transmission apparatus is formed of a first rotary member (rear wheel output shaft), a second rotary member (clutch drum), a clutch, and a cam mechanism. The first rotary member rotates together with an input shaft. The second rotary member is arranged on the axis of the first rotary member so as to be rotatable relative to the first rotary member. The clutch couples the second rotary member to the first rotary member such that the second rotary member is disengageable from the first rotary member. The cam mechanism converts rotational force from the first rotary member into pressing force (cam thrust force) toward the clutch through the clutch action of the clutch.

The first rotary member is coupled to a vehicle engine via the input shaft. The second rotary member is coupled to an output shaft (front wheel output shaft) via a transmission belt. The clutch includes two types of clutch plates, that is, inner clutch plates and outer clutch plates, and is arranged between the first rotary member and the second rotary member. The cam mechanism includes an input cam member (external gear), an output cam member (internal gear) that meshes with the input cam member, and cam followers that are interposed between the input cam member and the output cam member. The cam mechanism is coupled to an electric motor via a speed reduction mechanism.

With the above-described configuration, when driving force from the engine is input into the first rotary member via the input shaft, the first rotary member rotates about its axis. At this time, the cam mechanism is actuated by energizing the electric motor. Subsequently, when the cam mechanism is operated, the rotational force from the electric motor is converted into cam thrust force, and the cam thrust force is applied to the clutch. Therefore, the clutch plates of the clutch approach each other to frictionally engage with each other, and consequently the first rotary member and the second rotary member are coupled to each other such that torque is transmittable therebetween. Thus, the driving force from the engine is transmitted from the input shaft to the output shaft via the driving force transmission apparatus.

In the driving force transmission apparatus described in JP 2007-078134 A, if a distance between any adjacent two clutch plates of the clutch is set to such a large value that no adverse influence is caused by drag torque based on the viscosity of lubricating oil while the four-wheel-drive vehicle travels in a two-wheel-drive mode, the sum of the distances between the adjacent clutch plates significantly exceeds the distance over which the output cam member is moved through operation of the cam mechanism. As a result, desirable clutch action is not obtained while the vehicle travels in a four-wheel-drive mode.

In order to obtain desirable clutch action in the four-wheel-drive mode, for example, the ball diameter of each cam follower in the cam mechanism may be increased to obtain cam thrust force corresponding to the set ball diameter. However, in this case, the installation space for the cam mechanism increases because the input cam member and the output cam member need to be rotated in opposite directions.

Instead of increasing the ball diameter of each cam follower, the cam angle of each cam groove in the cam mechanism may be set to two values, that is, a large angle and a small angle, to obtain desirable clutch action in the four-wheel-drive mode.
However, in this case, usually, rotation of a retainer is not restricted. Therefore, the cam followers do not follow corresponding cam surfaces, and desired cam action is not ensured.

Therefore, there has been a demand for a driving force transmission apparatus that is able to ensure desired cam operation without an increase in the installation space for a cam mechanism.

It is the object of the invention to provide a driving force transmission apparatus that is able to ensure desired cam operation without an increase in the installation space for a cam mechanism.The object of the invention is achieved by a driving force transmission apparatus according to claim 1. Advantageous embodiments are carried out according to the dependent claims.

The foregoing and further features and advantages of the invention will become apparent from the following description of example embodiments with reference to the accompanying drawings, wherein like numerals are used to represent like elements and wherein:
FIG. 1 is a plan view that schematically shows a four-wheel-drive vehicle in which a driving force transmission apparatus according to an embodiment of the invention is mounted;
FIG. 2 is a sectional view for illustrating the entirety of the driving force transmission apparatus according to the embodiment of the invention, wherein the upper half shows a disconnected state and the lower half shows a connected state;
FIG. 3 is a sectional view for illustrating, for example, an auxiliary driving source and a speed reduction mechanism in the driving force transmission apparatus according to the embodiment of the invention;
FIG. 4 is a sectional view for illustrating, for example, a cam mechanism and a clutch in the driving force transmission apparatus according to the embodiment of the invention;
FIG. 5 is a simplified sectional view for illustrating the speed reduction mechanism of the driving force transmission apparatus according to the embodiment of the invention;
FIG. 6 is a perspective view for illustrating the cam mechanism of the driving force transmission apparatus according to the embodiment of the invention;
FIG. 7 is a perspective view for illustrating a cam member in the cam mechanism of the driving force transmission apparatus according to the embodiment of the invention;
FIG. 8 is a perspective view for illustrating an output member (retainer) in the cam mechanism of the driving force transmission apparatus according to the embodiment of the invention;
FIG. 9 is a perspective view for illustrating each rolling member and each support pin in the cam mechanism of the driving force transmission apparatus according to the embodiment of the invention;
FIG. 10 is a simplified side view for illustrating the operation of the cam mechanism in the driving force transmission apparatus according to the embodiment of the invention; and
FIG. 11 is a graph that shows the correlation between a rotation angle of the cam member and a moving stroke of the output member and the correlation between a rotation angle of the cam member and a torque transmitted from a first rotary member to a second rotary member in the driving force transmission apparatus according to the embodiment of the invention.

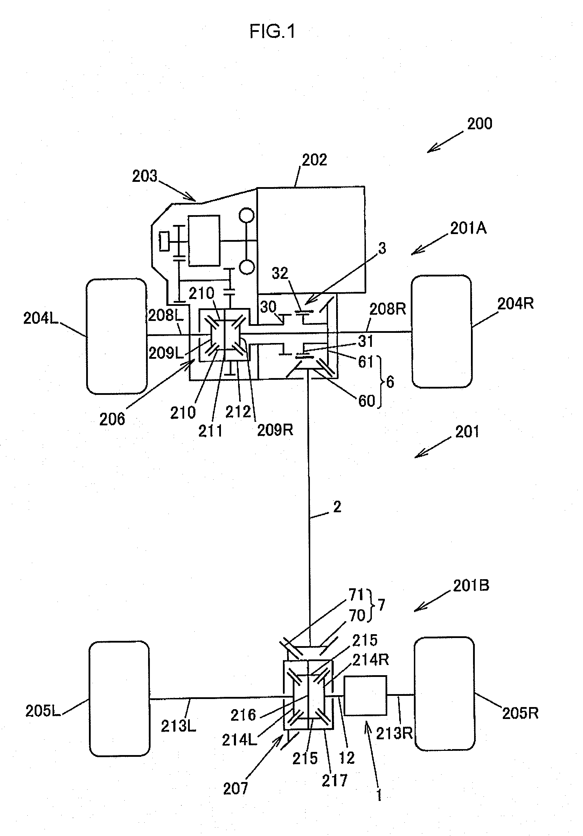

FIG. 1 schematically shows a four-wheel-drive vehicle 200. As shown in FIG. 1, the four-wheel-drive vehicle 200 includes a driving force transmission system 201, an engine (main driving source) 202, a transmission 203, front wheels 204R, 204L that serve as main drive wheels and rear wheels 205R, 205L that serve as auxiliary drive wheels.

The driving force transmission system 201 is arranged on a driving force transmission path that extends from the transmission 203 to the rear wheels 205R, 205L in the four-wheel-drive vehicle 200 together with a front differential 206 and a rear differential 207. The driving force transmission system 201 is mounted on a vehicle body (not shown) of the four-wheel-drive vehicle 200.

The driving force transmission system 201 includes a main drive wheel-side driving force transmission system 201A, an auxiliary drive wheel-side driving force transmission system 201B and a driving force transmission shaft (propeller shaft) 2. The driving force transmission system 201 is configured to be able to shift the four-wheel-drive vehicle 200 from a four-wheel-drive mode to a two-wheel-drive mode or from the two-wheel-drive mode to the four-wheel-drive mode.

The main drive wheel-side driving force transmission system 201A includes a main drive wheel-side driving force interruption unit (driving force interruption device 3), and is arranged on the front wheels 204R, 204L side of the propeller shaft 2. The auxiliary drive wheel-side driving force transmission system 201B includes an auxiliary drive wheel-side driving force interruption unit (driving force transmission apparatus 1), and is arranged on the rear wheels 205R, 205L side of the propeller shaft 2. The details of the driving force transmission apparatus 1 will be described later.

The front differential 206 includes side gears 209R, 209L, a pair of pinion gears 210, a gear support member 211 and a front differential case 212. The front differential 206 is coupled to the transmission 203. The side gear 209L is connected to a front wheel axle shaft 208L, and the side gear 209R is connected to a front wheel axle shaft 208R. The pinion gears 210 are in mesh with the side gears 209R, 209L with the gear axes of the pinion gears 210 extending perpendicularly to the gear axes of the side gears 209R, 209L. The pinion gears 210 are rotatably supported by the gear support member 211. The front differential case 212 accommodates the gear support member 211, the pinion gears 210 and the side gears 209R, 209L.

The rear differential 207 includes side gears 214R, 214L, a pair of pinion gears 215, a gear support member 216 and a rear differential case 217. The rear differential 207 is coupled to the propeller shaft 2. The side gear 214L is connected to a rear wheel axle shaft 213L, and the side gear 214R is connected to the driving force transmission apparatus 1 (rear wheel axle shaft 213R). The pinion gears 215 are in mesh with the side gears 214R, 214L with the gear axes of the pinion gears 215 extending perpendicularly to the gear axes of the side gears 214R, 214L. The pinion gears 215 are rotatably supported by the gear support member 216. The rear differential case 217 accommodates the gear support member 216, the pinion gears 215 and the side gears 214R, 214L.

The engine 202 outputs driving force to the front wheel axle shafts 208R, 208L via the transmission 203 and the front differential 206, thereby driving the front wheels 204R, 204L.

The engine 202 outputs driving force to the left rear wheel axle shaft 213L via the transmission 203, the driving force interruption device 3, the propeller shaft 2 and the rear differential 207, thereby driving the left rear wheel 205L. The engine 202 outputs driving force to the right rear wheel axle shaft 213R via the transmission 203, the driving force interruption device 3, the propeller shaft 2, the rear differential 207 and the driving force transmission apparatus 1, thereby driving the right rear wheel 205R.

The propeller shaft 2 is arranged between the driving force interruption device 3 and the rear differential 207 (driving force transmission apparatus 1). The propeller shaft 2 receives the driving force (driving torque) of the engine 202 from the front differential case 212 and then transmits the driving force from the front wheels 204R, 204L side toward the rear wheels 205R, 205L.

A front wheel gear mechanism 6 is arranged at the front wheel-side end portion of the propeller shaft 2. The front wheel gear mechanism 6 is formed of a drive pinion 60 and a ring gear 61 that are in mesh with each other. A rear wheel gear mechanism 7 is arranged at the rear wheel-side end portion of the propeller shaft 2. The rear wheel gear mechanism 7 is formed of a drive pinion 70 and a ring gear 71 that are in mesh with each other.

The driving force interruption device 3 is formed of a dog clutch that includes a first spline tooth portion 30, a second spline tooth portion 31 and a sleeve 32. The driving force interruption device 3 is arranged at the front wheels 204R, 204L side in the four-wheel-drive vehicle 200. The driving force interruption device 3 is connected to a vehicle electronic control unit (ECU) (not shown) via an actuator (not shown). The driving force interruption device 3 couples the propeller shaft 2 to the front differential case 212 such that the propeller shaft 2 is disengageable from the front differential case 212. The first spline tooth portion 30 is non-rotatably connected to the front differential case 212. The second spline tooth portion 31 is non-rotatably connected to the ring gear 61. The sleeve 32 is coupled such that the sleeve 32 is able to be spline-fitted to the first spline tooth portion 30 and the second spline tooth portion 31.

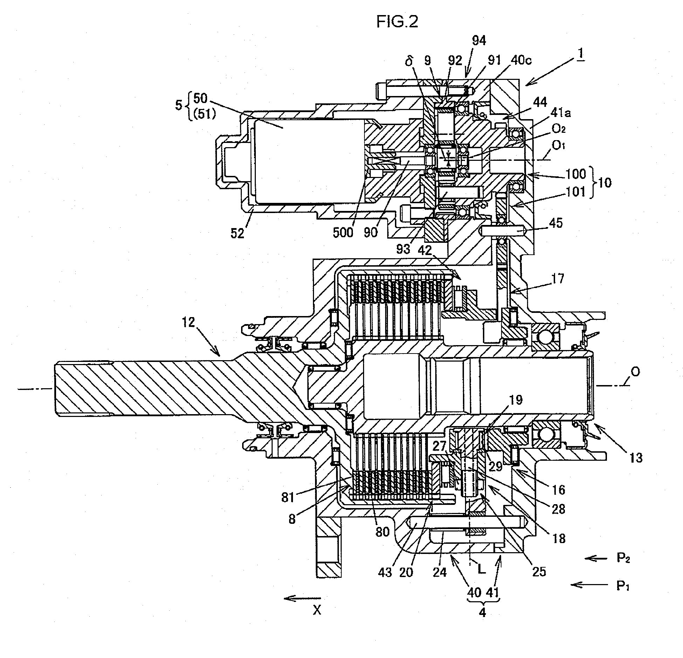

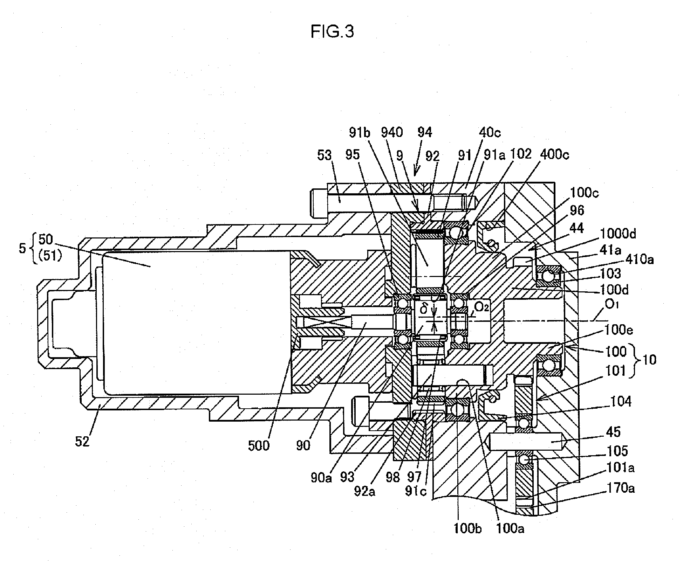

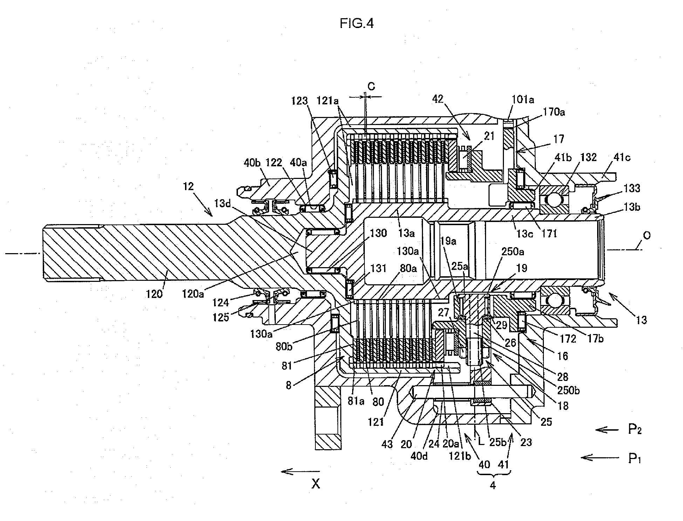

FIG. 2 shows the entirety of the driving force transmission apparatus. FIG. 3 shows, for example, an auxiliary driving source and a speed reduction mechanism. FIG. 4 shows, for example, a cam mechanism and a clutch. As shown in FIG. 2 to FIG. 4, the driving force transmission apparatus 1 includes a multiple disk clutch 8 that serves as the clutch, a housing (first rotary member) 12, an inner shaft (second rotary member) 13 and the cam mechanism 16. The driving force transmission apparatus 1 is arranged at the rear wheel 205R (shown in FIG. 1) side in the four-wheel-drive vehicle 200 (shown in FIG. 1), and is accommodated in an apparatus case 4.

The driving force transmission apparatus 1 couples the propeller shaft 2 (shown in FIG. 1) to the rear wheel axle shaft 213R (shown in FIG. 1) such that the propeller shaft 2 is disengageable from the rear wheel axle shaft 213R. That is, the rear wheel axle shaft 213R and the propeller shaft 2 are coupled to each other via the driving force transmission apparatus 1. The rear wheel axle shaft 213L (shown in FIG. 1) and the propeller shaft 2 are coupled to each other without providing the driving force transmission apparatus 1 therebetween.

Thus, when the rear wheel axle shaft 213R is coupled to the propeller shaft 2 by the driving force transmission apparatus 1, the left rear wheel axle shaft 213L is coupled to the propeller shaft 2 via the gear mechanism 7 and the rear differential 207 (both are shown in FIG. 1) such that torque is transmittable between the propeller shaft 2 and the left rear wheel axle shaft 213L, and the right rear wheel axle shaft 213R is coupled to the propeller shaft 2 via the gear mechanism 7 and the rear differential 207 such that torque is transmittable between the propeller shaft 2 and the right rear wheel axle shaft 213R. On the other hand, when the rear wheel axle shaft 213R is disconnected from the propeller shaft 2 by the driving force transmission apparatus 1, the left rear wheel axle shaft 213L remains coupled to the propeller shaft 2 via the gear mechanism 7 and the rear differential 207, whereas the right rear wheel axle shaft 213R is disconnected from the propeller shaft 2.

The apparatus case 4 is formed of a case body 40 and a case lid 41. The case body 40 is open toward one side (right side in FIG. 2) in the direction of a rotation axis O. The case lid 41 closes an opening portion of the case body 40. The apparatus case 4 is fitted to the vehicle body of the four-wheel-drive vehicle 200. A main accommodating space 42 is formed in the apparatus case 4. The main accommodating space 42 accommodates, for example, the cam mechanism 16 and the multiple disk clutch 8.

The case body 40 has an element insertion hole 40a and a cylindrical portion 40b. A first housing element 120 of the first housing 12 is passed through the element insertion hole 40a. The cylindrical portion 40b protrudes in the axial direction of the case body 40 from the outer opening periphery of the element insertion hole 40a. A fitting portion 40c is formed integrally with the case body 40. The fitting portion 40c protrudes from the outer face of the case body 40, and a cam actuating auxiliary driving source 5, which is different from the engine 202 (shown in FIG. 1), is fitted to the fitting portion 40c. A through-hole 400c is formed in the fitting portion 40c. The through-hole 400c is open toward both sides in an axial direction that is parallel to the rotation axis O. Multiple (three in the present embodiment) guides (fixing guides) 43, each of which is formed of a round pin having an axis parallel to a rotary shaft 90 (rotation axis O), are fitted to the case body 40 and the case lid 41. The guides 43 are arranged at equal intervals around the rotation axis O.

The case lid 41 is fitted to the case body 40 with bolts (not shown), and the entirety of the case lid 41 is formed of a cap member through which the inner shaft 13 (described later) is passed.

The case lid 41 has a lid portion 41a that faces the fitting portion 40c of the case body 40 via, for example, the speed reduction mechanism 9. An auxiliary accommodating space 44 is formed between the lid portion 41a and the fitting portion 40c. The auxiliary accommodating space 44 communicates with the main accommodating space 42. A support shaft 45 that is parallel to the guides 43 is fitted to the lid portion 41a and the fitting portion 40c. The lid portion 41a has a recessed hole 410a that communicates with the auxiliary accommodating space 44, that extends along the direction of an axis O₁, and that opens into the auxiliary accommodating space 44. The case lid 41 has a shaft insertion hole 41b and the cylindrical portion 41c. The inner shaft 13 is passed through the shaft insertion hole 41b. The cylindrical portion 41c protrudes in the axial direction of the case lid 41 from the outer opening periphery of the shaft insertion hole 41b.

The auxiliary driving source 5 includes an electric motor 50. The auxiliary driving source 5 is accommodated in a driving source housing 52, and is fitted to a speed reduction mechanism housing 94 with bolts 53. A motor shaft (drive shaft that serves as an input shaft) 500 of the electric motor 50 of the auxiliary driving source 5 is coupled to the cam mechanism 16 (cam member 17 described later) via the speed reduction mechanism 9 and a gear transmission mechanism 10. Thus, the speed of rotation output from the electric motor 50 is reduced by the speed reduction mechanism 9, and the rotation with a reduced speed is reliably transmitted from the gear transmission mechanism 10 to the cam member 17 via a gear portion 170a.

In FIG. 2 and FIG. 3, the electric motor 50 is shown in a partially sectional view. A motor housing 51 of the electric motor 50 is shown in side external view. The motor housing 51 is fixed to the driving source housing 52. A rotary portion of the electric motor 50 is arranged so as to be rotatable with respect to the motor housing 51, and is connected to the motor shaft 500 that is shown in a sectional view. In the motor 50, the motor shaft 500 rotates with respect to the motor housing 51.

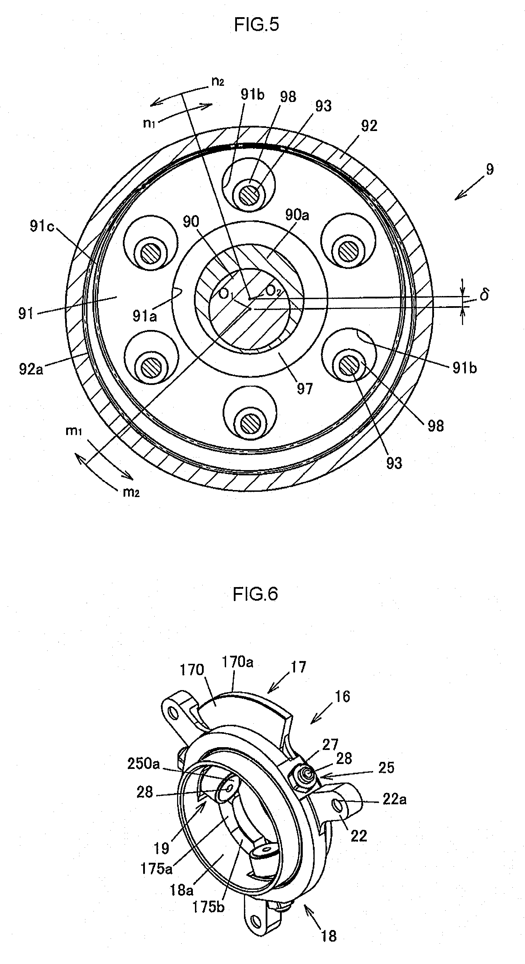

FIG. 5 shows the speed reduction mechanism. In the present embodiment, the speed reduction mechanism is an eccentric oscillating-type speed reduction mechanism. More specifically, the speed reduction mechanism is an involute speed reduction mechanism with a small difference in the number of teeth, which is one type of eccentric oscillating-type speed reduction mechanisms. By using the eccentric oscillating-type speed reduction mechanism, it is possible to obtain a large speed reduction ratio. As shown in FIG. 3 and FIG. 5, the speed reduction mechanism 9 includes the rotary shaft 90, an input member 91, a rotation force applying member 92 and a plurality of (six in the present embodiment) output members 93. The speed reduction mechanism 9 is interposed between the driving source housing 52 and the fitting portion 40c of the case body 40, and is accommodated in a speed reduction mechanism housing 94. The speed reduction mechanism 9 is configured to reduce the speed of rotation output from the electric motor 50 and transmit driving force to the gear transmission mechanism 10.

The rotary shaft 90 has an eccentric portion 90a having a central axis that is an axis O₂, which is offset by an eccentric amount δ from the axis O₁ (which coincides with the axis O₁ of the rotation center of the rotary shaft 90) of the motor shaft 500 of the electric motor 50 and which is parallel to the axis O₁. The rotary shaft 90 is coupled to the motor shaft 500. The rotary shaft 90 is rotatably supported by a housing element 940 of the speed reduction mechanism housing 94 via a ball bearing 95, and is rotatably supported by a first gear (driven shaft that serves as an output shaft) 100 of the gear transmission mechanism 10 via a ball bearing 96.

The input member 91 is formed of an external gear having a center hole 91a of which the central axis coincides with an axis O₃ (axis O₂ in the present embodiment). The input member 91 is accommodated in the speed reduction mechanism housing 94, and is rotatably supported by the rotary shaft 90 with a needle roller bearing 97 interposed between the inner periphery of the input member 91, which defines the center hole 91a, and the outer periphery of the eccentric portion 90a. Instead of the needle roller bearing 97, another type of rolling bearing that is able to receive a radial load may be employed. The input member 91 that receives a radial load makes circular motions in the direction of an arrow m₁ or an arrow m₂ (the axis O₂ makes a revolving motion around the axis O₁) with the eccentric amount δ upon reception of motor torque from the electric motor 50.

The input member 91 has pin insertion holes 91b that are arranged at equal intervals around the axis O₂. The pin insertion holes 91b serve as a plurality of (six in the present embodiment) through-holes. The hole diameter of each pin insertion hole 91b is set to a value that is larger than a value obtained by adding the outside diameter of each needle roller bearing 98 to the outside diameter of each output member 93. External teeth 91c, having an involute tooth profile and having a pitch circle that has a central axis which coincides with the axis O₂, are formed on the outer periphery of the input member 91.

The rotation force applying member 92 is formed of an internal gear having a central axis that coincides with an axis O₄ (the axis O₁ in the present embodiment). The rotation force applying member 92 is interposed between the housing element 940 of the speed reduction mechanism housing 94 and the fitting portion 40c of the apparatus case 4. The entirety of the rotation force applying member 92 is formed of an annular member that constitutes part of the speed reduction mechanism housing 94 and that open toward both sides in the direction of the axis O₁. The rotation force applying member 92 is in mesh with the input member 91, and applies rotation force in the direction of an arrow n₁ or an arrow n₂ (around the axis O₂) to the input member 91 that revolves upon reception of the motor torque from the electric motor 50. Internal teeth 92a, having an involute tooth profile, are formed on the inner periphery of the rotation force applying member 92. The internal teeth 92a are in mesh with the external teeth 91c of the input member 91. If the number of the internal teeth 92a is Z3 and the number of the external teeth 91c of the input member 91 is Z2, a speed reduction ratio α of the speed reduction mechanism 9 is calculated according to α = Z2/(Z3 - Z2).

The output members 93 each are formed of a pin having a substantially uniform outside diameter. The output members 93 are passed through the pin insertion holes 91b of the input member 91, and are fitted into pin fitting holes 100a of the first gear 100 of the gear transmission mechanism 10. The output members 93 receive rotation force, applied by the rotation force applying member 92, from the input member 91 and then output the rotation force to the first gear 100.

The needle roller bearing 98 is fitted to the outer periphery of each of the output members 93. The needle roller bearing 98 is used to reduce contact resistance between each output member 93 and the inner periphery of the input member 91, which defines the corresponding pin insertion hole 91b.

The gear transmission mechanism 10 includes the first gear 100 and a second gear 101. The gear transmission mechanism 10 is interposed between the speed reduction mechanism 9 and the cam mechanism 16, and is accommodated in the apparatus case 4. The gear transmission mechanism 10 receives the rotation, of which the speed is reduced by the speed reduction mechanism 9, from the auxiliary driving source 5, and transmits the driving force to the cam mechanism 16.

The first gear 100 is arranged on the axis O₁ of the rotary shaft 90, and is rotatably supported in the apparatus case 4 via ball bearings 102, 103. The first gear 100 is formed of a stepped cylindrical member. The stepped cylindrical member has cylindrical portions 100b to 100e having different outside diameters, and is open toward both sides in the axial direction.

The cylindrical portion 100b has an outside diameter larger than the outside diameter of each of the cylindrical portions 100c to 100e, and is arranged near the speed reduction mechanism 9. The ball bearing 102 is interposed between the outer periphery of the cylindrical portion 100b and the inner periphery of the case body 40 (fitting portion 40c), which defines the through-hole 400c.

The cylindrical portion 100c is located between the cylindrical portion 100b and the cylindrical portion 100d. A seal mechanism 104 is interposed between the outer periphery of the cylindrical portion 100c and the inner periphery of the case body 40 (fitting portion 40c), which defines the through-hole 400c.

The cylindrical portion 100d has an outside diameter smaller than the outside diameter of the cylindrical portion 100c, and is located between the cylindrical portion 100c and the cylindrical portion 100e. A gear portion 1000d is formed on the outer periphery of the cylindrical portion 100d. The gear portion 1000d is in mesh with a gear portion 101a of the second gear 101.

The cylindrical portion 100e has an outside diameter smaller than the outside diameter of each of the cylindrical portions 100b to 100d, and is arranged near the case lid 41 (lid portion 41a). The ball bearing 103 is interposed between the outer periphery of the cylindrical portion 100e and the inner periphery of the case lid 41 (lid portion 41a), which defines the recessed hole 410a.

In the second gear 101, the gear portion 101a is arranged at a position at which the gear portion 101a is in mesh with the first gear 100, and is rotatably supported by the support shaft 45 via a ball bearing 105.

As shown in FIG. 4, the multiple disk clutch 8 is formed of a friction clutch that includes a plurality of inner clutch plates 80 (first clutch plates) and a plurality of outer clutch plates 81 (second clutch plates). The inner clutch plates 80 and the outer clutch plates 81 are arranged in the direction of the rotation axis O. The multiple disk clutch 8 is arranged between the housing 12 and the inner shaft 13.

Any adjacent inner and outer clutch plates among the inner clutch plates 80 and the outer clutch plates 81 of the multiple disk clutch 8 may be frictionally engaged with each other. Also, the frictional engagement between the inner clutch plates 80 and the outer clutch plates 81 of the multiple disk clutch 8 may be cancelled. In this way, the multiple disk clutch 8 couples the housing 12 and the inner shaft 13 to each other such that the housing 12 and the inner shaft 13 are disengageable from each other.

The inner clutch plates 80 and the outer clutch plates 81 are alternately arranged along the rotation axis O, and each are formed of an annular friction plate. A clearance C between any adjacent two clutch plates among the inner clutch plates 80 and the outer clutch plates 81 in an initial state is set to such a value that the clutch plates do not frictionally engage with each other due to drag torque based on the viscosity of lubricating oil when the four-wheel-drive vehicle 200 (shown in FIG. 1) travels in the two-wheel-drive mode.

Each of the inner clutch plates 80 has a straight spline fitting portion 80a at its inner peripheral portion. The straight spline fitting portions 80a of the inner clutch plates 80 are fitted to a straight spline fitting portion 130a of the cylindrical portion 13a (inner shaft 13). Thus, the inner clutch plates 80 are connected to the inner shaft 13 so as to be non-rotatable but movable relative to the inner shaft 13.

A plurality of oil holes 80b are formed in each of the inner clutch plates 80. The oil holes 80b are arranged in the circumferential direction of the inner clutch plates 80, and are open toward the rotation axis O.

Each of the outer clutch plates 81 has a straight spline fitting portion 81a at its outer peripheral portion. The straight spline fitting portions 81a of the outer clutch plates 81 are fitted to a straight spline fitting portion 121b (described later) of the second housing element 121. Thus, the outer clutch plates 81 are connected to the housing 12 so as to be non-rotatable but movable relative to the housing 12.

As shown in FIG. 4, the housing 12 is formed of the first housing element 120 and the second housing element 121. The housing 12 is arranged on the axis (rotation axis O) of the rear wheel axle shaft 213R (shown in FIG. 1), and is rotatably supported in the apparatus case 4 via needle roller bearings 122, 123.

The first housing element 120 is formed of a shaft member having an axis that coincides with the rotation axis O. The first housing element 120 is located at one-side (left-side in FIG. 4) end portion of the housing 12, and is coupled to the side gear 214R (shown in FIG. 1) by spline fitting. The needle roller bearing 122 is interposed between the outer periphery of the first housing element 120, and the inner periphery of the case body 40, which defines the element insertion hole 40a, and the inner periphery of the cylindrical portion 40b of the case body 40. Seal mechanisms 124, 125 are interposed between the outer periphery of the first housing element 120 and the inner periphery of the cylindrical portion 40b, and are arranged next to each other in the axial direction of the element insertion hole 40a. The first housing element 120 has a recessed portion 120a formed of a round hole that is open toward the cam mechanism 16.

The second housing element 121 is located at the other-side (right-side in FIG. 4) end portion of the housing 12, and is formed of a closed-end cylindrical member that is open toward the cam mechanism 16. The second housing element 121 has the straight spline fitting portion 121b on its cylindrical inner periphery. A space that is defined by the cylindrical inner periphery of the second housing element 121 is an accommodating space 121a. The accommodating space 121a communicates with the recessed portion 120a of the first housing element 120 and the main accommodating space 42 of the apparatus case 4. The straight spline fitting portion 121b is exposed to the accommodating space 121a. The needle roller bearing 123 is interposed between the bottom portion of the second housing element 121 and the inner opening periphery of the insertion hole 40a of the case body 40.

As shown in FIG. 4, the inner shaft 13 is arranged on the rotation axis O of the housing 12. The inner shaft 13 is rotatably supported by the housing 12 via needle roller bearings 130, 131, and is rotatably supported by the case lid 41 via a ball bearing 132. The inner shaft 13 has cylindrical portions 13a to 13c and a shaft portion 13d. The cylindrical portions 13a to 13c have outside diameters that differ from one another. The inner shaft 13 is formed of a closed-end cylindrical member that is open toward one side in the axial direction (toward the rear wheel 205R shown in FIG. 1). The distal end portion of the rear wheel axle shaft 213R (shown in FIG. 1) is inserted and accommodated in the opening portion of the inner shaft 13. The rear wheel axle shaft 213R is coupled to the inner shaft 13 by spline fitting so as to be non-rotatable but movable relative to the inner shaft 13.

The cylindrical portion 13a is located between the cylindrical portion 13c and the shaft portion 13d. The outside diameter of the cylindrical portion 13a is set to a value that is larger than the outside diameter of each of the cylindrical portions 13b, 13c and shaft portion 13d. The straight spline fitting portion 130a is formed on the outer periphery of the cylindrical portion 13a. The straight spline fitting portion 130a is exposed to the main accommodating space 42 of the apparatus case 4, and is fitted to the straight spline fitting portions 80a of the inner clutch plates 80 of the multiple disk clutch 8. The needle roller bearing 131 is interposed between the bottom portion of the cylindrical portion 13a and the bottom portion of the second housing element 121 of the housing 12.

The cylindrical portion 13b is arranged at one-side (right-side in FIG. 4) end portion of the inner shaft 13. The outside diameter of the cylindrical portion 13b is set to a value that is smaller than the outside diameter of the cylindrical portion 13c. The ball bearing 132 and a seal mechanism 133 are interposed between the outer periphery of the cylindrical portion 13b and the inner periphery of the cylindrical portion 41c of the case lid 41.

The cylindrical portion 13c is located between the cylindrical portion 13a and the cylindrical portion 13b. The outside diameter of the cylindrical portion 13c is set to a value intermediate between the outside diameter of the cylindrical portion 13a and the outside diameter of the cylindrical portion 13b.

The shaft portion 13d is located at the other-side (left-side in FIG. 4) end portion of the inner shaft 13. The shaft portion 13d is accommodated in the recessed portion 120a of the first housing element 120 of the housing 12. The outside diameter of the shaft portion 13d is set to a value that is smaller than the outside diameter of each of the cylindrical portions 13a to 13c. The needle roller bearing 130 is interposed between the outer periphery of the shaft portion 13d and the inner periphery of the recessed portion 120a of the first housing element 120.

FIG. 6 shows the cam mechanism. As shown in FIG. 4 and FIG. 6, the cam mechanism 16 includes a cam member (input member) 17, a retainer (output member) 18 and rolling members 19. The cam mechanism 16 is arranged on the radially outer side of the cylindrical portion 13c of the inner shaft 13, and is accommodated in the main accommodating space 42 of the apparatus case 4. The cam mechanism 16 converts motor torque from the auxiliary driving source 5 (electric motor 50) (driving force from the speed reduction mechanism 9) into cam thrust force for applying pressing force, which is clutch action force, to the multiple disk clutch 8. The cam thrust force includes a first cam thrust force P₁ for bringing the clearance C between any adjacent two clutch plates among the inner clutch plates 80 and the outer clutch plates 81 of the multiple disk clutch 8 to, for example, 0 (C = 0) and a second cam thrust force P₂ for frictionally engaging the inner clutch plates 80 and outer clutch plates 81 of the multiple disk clutch 8 with each other.

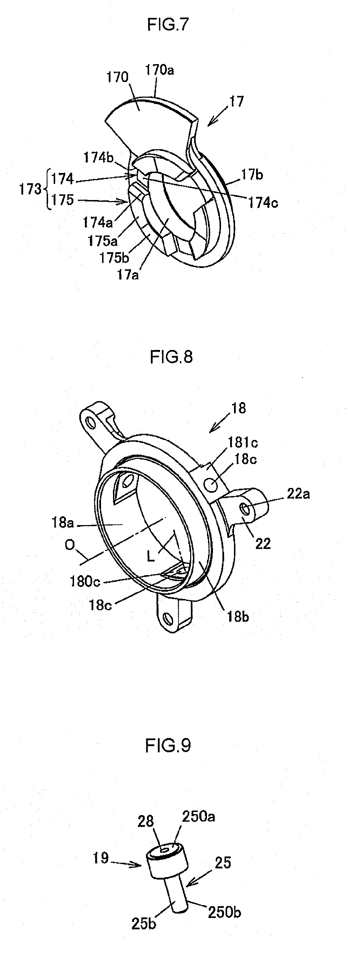

FIG. 7 shows the cam member. As shown in FIG. 4 and FIG. 7, the cam member 17 has a shaft insertion hole 17a through which the inner shaft 13 is passed. The cam member 17 is located at one-side (right-side in FIG. 4) end portion of the cam mechanism 16, and is formed of an annular member that rotates about the rotation axis O.

A protruding piece 170 is formed on the outer peripheral edge of the cam member 17. The protruding piece 170 protrudes in the radial direction of the cam member 17. The protruding piece 170 has a gear portion 170a that is in mesh with the second gear 101 (gear portion 101a) of the gear transmission mechanism 10.

A cylindrical portion 17b is formed on the axial one-side end face of the cam member 17. The cylindrical portion 17b protrudes from the opening periphery of the shaft insertion hole 17a toward the rear wheel 205R (shown in FIG. 1). A needle roller bearing 171 is interposed between the inner periphery of the cylindrical portion 17b and the outer periphery of the cylindrical portion 13c of the inner shaft 13. A needle roller bearing 172 is interposed between the axial one-side end face of the cam member 17 and the inner opening periphery of the shaft insertion hole 41b of the case lid 41. The axial other-side (left-side in FIG. 4) end face of the cam member 17 is formed of a patterned indented face 173 that serves as a cam surface that faces the multiple disk clutch 8.

The patterned indented face 173 has recesses 174 and protrusions 175 that are alternately arranged around the axis of the cam member 17. The patterned indented face 173 applies the first cam thrust force P₁ and the second cam thrust force P₂ in the direction along the rotation axis O to the rolling members 19 by causing the rolling members 19 to roll. In the present embodiment, if the recess 174 and the protrusion 175 that are adjacent to each other in the circumferential direction of the cam member 17 are defined as a set of recess and protrusion, the patterned indented face 173 is formed of three sets of recess and protrusion.

Each of the recesses 174 is formed of a cutout having a substantially rectangular cross section. The cutout is defined by a pair of cutout side faces 174a, 174b and a cutout bottom face 174c. The cutout side faces 174a, 174b have a substantially uniform cutout width. The cutout bottom face 174c is located between the cutout side faces 174a, 174b.

Each cutout side face 174a functions as a guide face that has a curved face and is used to guide the corresponding rolling member 19 from the recess 174 to the protrusion 175 at one side in the direction around the rotation axis O. Each cutout side face 174b functions as a stopper face substantially perpendicular to the corresponding cutout bottom face 174c at the other side in the direction around the rotation axis O.

Each protrusion 175 is located between any adjacent two recesses among the three recesses 174. The rolling member 19-side end face of each protrusion 175 is formed of faces 175a, 175b that are adjacent to each other in the circumferential direction of the cam member 17.

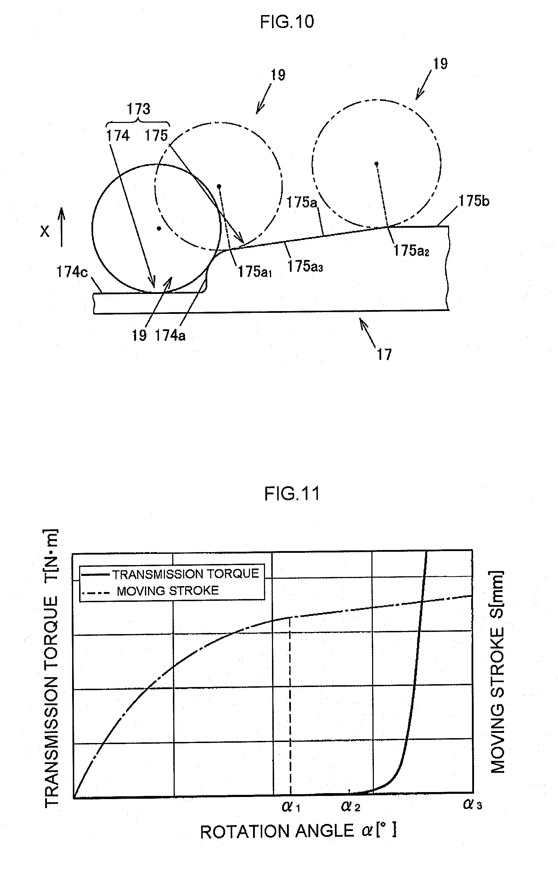

Each face 175a is formed of a raceway surface having an inclined face of which the height in the axial direction of the cam member 17 (protrusion height of the protrusion 175) is gradually increased from the corresponding recess 174 toward the face 175b (along the circumferential direction of the cam member 17). Thus, if the recess 174-side end portion among the both circumferential end portions of each face 175a is defined as a starting end portion 175a₁ (shown in FIG. 10), the cam mechanism 16 outputs the first cam thrust force P₁ from the retainer 18 in a state where each rolling member 19 is arranged at the corresponding starting end portion 175a₁. In addition, if the end portion on the side opposite to the starting end portion 175a₁ (face 175b-side end portion) among the both circumferential end portions of each face 175a is defined as a terminal end portion 175a₂ (shown in FIG. 10), the cam mechanism 16 outputs the second cam thrust force P₂ from the retainer 18 in a state where each rolling member 19 is located between the starting end portion 175a₁ and the terminal end portion 175a₂.

Each face 175b is formed of a flat face having a substantially uniform height in the axial direction of the cam member 17.

FIG. 8 shows the output member (retainer). As shown in FIG. 4 and FIG. 8, the retainer 18 has a shaft insertion hole 18a through which the inner shaft 13 is passed. The retainer 18 is arranged at the other-side (left-side in FIG. 4) end portion of the cam mechanism 16, and is formed of an annular member that is movable in the direction of the rotation axis O. The rotation of the retainer 18 is restricted by the guides (fixing guides) 43. Then, the retainer 18 outputs the first cam thrust force P₁ and the second cam thrust force P₂ toward the multiple disk clutch 8, and retains the rolling members 19 such that the rolling members 19 are rollable. The shaft insertion hole 18a functions as an accommodating space that accommodates the rolling members 19.

A cylindrical portion 18b is formed on the clutch-side end face of the retainer 18. The cylindrical portion 18b protrudes from the opening periphery of the shaft insertion hole 18a toward the multiple disk clutch 8. An annular pressing member 20 is arranged on the radially outer side of the cylindrical portion 18b. The pressing member 20 presses the multiple disk clutch 8 (outer clutch plates 81) upon reception of the first cam thrust force P₁ and the second cam thrust force P₂ from the retainer 18. A straight spline fitting portion 20a is formed at the outer peripheral edge of the pressing member 20. The straight spline fitting portion 20a is fitted to the straight spline fitting portion 121b of the second housing element 121 of the housing 12. A needle roller bearing 21 is interposed between the one-side (side opposite to the multiple disk clutch-side end face) end face of the pressing member 20 and the clutch-side end face of the retainer 18.

Multiple (three in the present embodiment) protruding pieces 22 are formed on the outer peripheral edge of the retainer 18. The protruding pieces 22 protrude in the radial direction of the retainer 18. The protruding pieces 22 are arranged at equal intervals in the circumferential direction of the retainer 18. Each of the protruding pieces 22 has a guide insertion hole 22a through which the corresponding guide 43 is passed. A bearing bush 23 is interposed between the inner periphery of each protruding piece 22, which defines the guide insertion hole 22a, and the outer periphery of the corresponding guide 43. This reduces resistance at the time when the retainer 18 moves along the guides 43. A return spring 24 is interposed between the opening periphery of each guide insertion hole 22a and a spring receiving face 40d of the case body 40.

The retainer 18 has a plurality of (three in the present embodiment) pin insertion holes 18c. Each of the pin insertion holes 18c is open at the inner and outer peripheries of the retainer 18, and a corresponding support pin 25 is passed through the pin insertion hole 18c. Each of the pin insertion holes 18c has an axis L that extends in a direction perpendicular to the axes of the cam member 17 and retainer 18 (rotation axis O), and is formed at a position near the corresponding protruding piece 22. A seat face 180c on which an annular roller receiving member 26 is seated is formed at the inner opening periphery of each of the pin insertion holes 18c. A seat face 181c on which a nut 27 is seated is formed at the outer opening periphery of each of the pin insertion holes 18c.

Each support pin 25 has two body portions, that is, a large body portion 25a and a small body portion 25b having outside diameters that are different from each other (a large-diameter body portion 25a and a small-diameter body portion 25b). Each support pin 25 is fitted to the retainer 18 in a state where movement in the axial direction is restricted by the body portion 25a and the nut 27. A core member 28 is embedded in each support pin 25 such that the axis of the core member 28 coincides with the axis of the support pin 25.

The large-diameter body portion 25a is located at the axial one-side (rotation axis O-side) end portion of each support pin 25 in a state where the large-diameter body portion 25a is exposed to the inside of the shaft insertion hole 18a. The outer periphery of the large-diameter body portion 25a functions as an inner raceway surface for needle rollers 29. The large-diameter body portion 25a has a rib portion 250a that protrudes from the outer periphery of the large-diameter body portion 25a at the rotation axis O-side end portion and that faces the roller receiving member 26 via the needle rollers 29.

The small-diameter body portion 25b is located at the axial other-side (guide 43-side) end portion of each support pin 25 in a state where the small-diameter body portion 25b is passed through the pin insertion hole 18c. The small-diameter body portion 25b has a threaded portion 250b to which the nut 27 is screwed (fastened).

FIG. 9 shows each rolling member and each support pin. As shown in FIG. 4 and FIG. 9, each rolling member 19 is arranged inside the shaft insertion hole 18a of the retainer 18. Each rolling member 19 is formed of a cylindrical member. The outer periphery of each rolling member 19 rolls on the patterned indented face 173. Each rolling member 19 is arranged along the axis L of the corresponding pin insertion hole 18c, and is rotatably supported, via the needle rollers 29, on the outer periphery of the large-diameter body portion 25a.

Each rolling member 19 has a cylindrical protruding portion 19a that protrudes toward the needle rollers 29 at the center portion in the axial direction. The axial one-side end face of the protruding portion 19a faces the end face of the rib portion 250a, and the axial other-side end face of the protruding portion 19a faces the end face of the roller receiving member 26. The inner periphery of the protruding portion 19a functions as an outer raceway surface for the needle rollers 29. The support pin 25, the needle rollers 29 and the rolling member 19 respectively correspond to an inner ring (or inner shaft), rolling elements and an outer ring, and the outer periphery of the outer ring is a kind of roller that rolls on the patterned indented face 173.

Next, an operation of the driving force transmission apparatus according to the present embodiment will be described with reference to FIG. 1, FIG. 2 and FIG. 10. FIG. 10 shows an operating state of each rolling member in the cam mechanism.

In FIG. 1, when the four-wheel-drive vehicle 200 travels in the two-wheel-drive mode, the rotational driving force output from the engine 202 is transmitted to the front differential 206 via the transmission 203. The rotational driving force output from the engine 202 is transmitted from the front differential 206 to the front wheels 204R, 204L via the front wheel axle shafts 208R, 208L. Thus, the front wheels 204R, 204L are rotated.

In this case, in the driving force interruption device 3, torque is not transmittable between the first spline tooth portion 30 and the second spline tooth portion 31. As shown in FIG. 2 (upper half), because the electric motor 50 of the auxiliary driving source 5 is in a non-energized state, the motor torque output from the electric motor 50 is not transmitted to the cam mechanism 16 via the speed reduction mechanism 9 and the gear transmission mechanism 10, and the cam mechanism 16 is not actuated. Each rolling member 19 is in contact with the cutout bottom face 174c of the corresponding recess 174, and the inner clutch plates 80 and the outer clutch plates 81 are not frictionally engaged with each other.

On the other hand, in order to shift the four-wheel-drive vehicle 200 from the two-wheel-drive mode to the four-wheel-drive mode, the propeller shaft 2 is coupled to the rear wheel axle shaft 213R by the driving force transmission apparatus 1 such that torque is transmittable between the propeller shaft 2 and the rear wheel axle shaft 213R. The front differential case 212 is continuously coupled to the propeller shaft 2 by the driving force interruption device 3 such that torque is transmittable between the front differential case 212 and the propeller shaft 2. The propeller shaft 2 is constantly coupled to the rear wheel axle shaft 213L via, for example, the rear differential 207 such that torque is transmittable between the propeller shaft 2 and the rear wheel axle shaft 213L.

Therefore, the rotational driving force output from the engine 202 is transmitted from the propeller shaft 2 to the rear wheel 205L via, for example, the rear differential 207 and the rear wheel axle shaft 213L. As a result, the rear wheel 205L is rotated.

In order to couple the propeller shaft 2 to the rear wheel axle shaft 213R by the driving force transmission apparatus 1, the cam mechanism 16 is operated by applying the motor torque output from the electric motor 50 to the cam mechanism 16 as shown in FIG. 2 (lower half). In this case, when the cam mechanism 16 is operated, the cam member 17 rotates in one direction around the rotation axis O (direction in which the retainer 18 is moved in the direction of an arrow X).

Accordingly, each rolling member 19 starts rolling from a state (initial state) where the rolling member 19 is located in the corresponding recess 174 of the patterned indented face 173 of the cam member 17 as indicated by the continuous line in FIG. 10, runs onto the face 175a of the corresponding protrusion 175 of the cam member 17 as indicated by the long dashed short dashed line in FIG. 10, and is then located at the starting end portion 175a₁. At this time, in the cam mechanism 16, the motor torque output from the electric motor 50 is converted into the first cam thrust force P₁ for bringing the clearance C (not shown) between any adjacent two clutch plates among the inner clutch plates 80 and the outer clutch plates 81 of the multiple disk clutch 8 to (C = 0).

Therefore, each rolling member 19 moves toward the multiple disk clutch 8 (in the direction of the arrow X) along the rotation axis O, and presses the retainer 18 in the moving direction via the needle rollers 29 and the support pins 25.

Accordingly, the retainer 18 moves in the direction of the arrow X against the spring force of the return springs 24, and presses the pressing member 20 in such a direction that the inner clutch plates 80 and the outer clutch plates 81 approach each other.

Thus, the pressing member 20 presses the inner clutch plates 80 and the outer clutch plates 81 in the direction of the arrow X, and the clearance C (not shown) between any adjacent two clutch plates becomes, for example, 0 (C = 0).

Subsequently, when the cam member 17 further rotates in one direction around the rotation axis O upon reception of the motor torque output from the electric motor 50, each rolling member 19 rolls on the face 175a of the protrusion 175 from the position indicated by the long dashed short dashed line in FIG. 10 toward the face 175b. After that, the rolling member 19 reaches the terminal end portion 175a₂ of the face 175a and runs onto the face 175b of the protrusion 175. At this time, for example, when each rolling member 19 has reached a position close to the terminal end portion 175a₂, which is within the range in which the rolling member 19 rolls on the face 175a between the starting end portion 175a₁ and the terminal end portion 175a₂, the cam mechanism 16 converts the motor torque output from the electric motor 50 into the second cam thrust force P₂ for frictionally engaging the inner clutch plates 80 and the outer clutch plates 81 with each other.

Therefore, each rolling member 19 moves toward the multiple disk clutch 8 (in the direction of the arrow X) along the rotation axis O as indicated by the long dashed double-short dashed line in FIG. 10, and presses the retainer 18 in the moving direction via the needle rollers 29 and the support pins 25.

Accordingly, the retainer 18 moves in the direction of the arrow X against the spring force of the return springs 24, and presses the pressing member 20 in such a direction that the inner clutch plates 80 and the outer clutch plates 81 are frictionally engaged with each other.

Therefore, the pressing member 20 presses the inner clutch plates 80 and the outer clutch plates 81 in the direction of the arrow X, and any adjacent two clutch plates are frictionally engaged with each other.

Thus, the rotational driving force output from the engine 202 is transmitted from the housing 12 to the inner shaft 13 and then transmitted from the inner shaft 13 to the rear wheel 205R via the rear wheel axle shaft 213R. As a result, the rear wheel 205R is rotated.

Next, the correlation among a rotation angle α (°) of the cam member 17, a moving stroke S (mm) of the retainer 18 along the rotation axis O and a torque (transmission torque) T (N•m) that is transmitted from the housing 12 to the inner shaft 13 will be examined.

This examination was conducted by, in the driving force transmission apparatus 1, rotating the cam member 17 in such a direction that the first cam thrust force P₁ and the second cam thrust force P₂ are generated and then measuring the moving stroke S and the transmission torque T with respect to the rotation angle α.

As a result, it was found that the moving stroke S increases along a relatively gentle convex curve when the rotation angle α is within a range from α₀ to α₁, and increases substantially in proportion to the rotation angle α after the rotation angle α exceeds α₁. In this case, each rolling member 19 rolls on the patterned indented face 173 of the cam member 17, and is located at the position indicated by long dashed short dashed line in FIG. 10 at α₁, and is located at the position indicated by long dashed double-short dashed line in FIG. 10 at α₃.

On the other hand, it was found that the transmission torque T is 0 when the rotation angle α is within the range from α₀ to α₂ (α₂ < α₃), and is larger than 0 when the rotation angle α is larger than α₂. In addition, it was found that, when the rotation angle α exceeds α₂, the transmission torque T steeply increases.

When the rotation angle α is α₁, it is considered that each rolling member 19 is in contact with the starting end portion 175a₁. When the rotation angle α is α₂, it is considered that each rolling member 19 is in contact with a portion 175a₃ of the face 175a. When the rotation angle α is α₃, it is considered that each rolling member 19 is in contact with the terminal end portion 175a₂.

This is as shown in FIG. 11. FIG. 11 shows the results obtained by examining the correlation between the rotation angle and the moving stroke of the retainer and the correlation between the rotation angle and the torque transmitted between rotary members. In FIG. 11, the moving stroke S is indicated by the long dashed short dashed line, and the transmission torque T is indicated by the continuous line.

According to the above-described first embodiment, the following advantageous effects are obtained.
(1) Because the first cam thrust force P₁ and the second cam thrust force P₂ are obtained by rotating only the cam member 17 with the rotation of the retainer 18 restricted, the installation space for the cam mechanism 16 does not increase unlike in the related art. By restricting the rotation of the retainer 18, the rolling members 19 roll in accordance with the rotation of the cam member 17 at the time when the cam mechanism 16 is operated. Therefore, it is possible to ensure desired cam action.
(2) The rolling members 19 are accommodated in the shaft insertion hole 18a of the retainer 18. Therefore, the axial size of the cam mechanism 16 is reduced, which contributes to a reduction in the whole size of the apparatus.
(3) The retainer 18 moves along the guides 43 arranged in the circumferential direction. Therefore, the rotation of the retainer 18 is restricted by the guides 43.
(4) Each rolling member 19 is a cylindrical roller. Therefore, each rolling member 19 rolls while being in line contact with the cam member 17. Thus, the radial load bearing capacity is higher than that in the case where each rolling member is a ball.
(5) In the cam member 17, a two-stage cam for moving the retainer 18 toward the multiple disk clutch 8 (obtaining the first cam thrust force P₁ and the second cam thrust force P₂) is obtained by the patterned indented face 173. In this case, the face 175a of each protrusion 175 of the patterned indented face 173 is formed of a raceway surface of which the height in the axial direction is gradually increased along the circumferential direction of the cam member 17. Therefore, when each rolling member 19 rolls in such a direction as to move upward on the corresponding face 175a (from the starting end portion 175a₁ toward the terminal end portion 175a₂), the amount of movement of the retainer 18 toward the multiple disk clutch 8 increases.
(6) The cam member 17 has the gear portion 170a that is in mesh with the electric motor 50 via the speed reduction mechanism 9 and the gear transmission mechanism 10. Therefore, the speed of rotation output from the electric motor 50 is reduced by the speed reduction mechanism 9, and the rotation with a reduced speed is then reliably transmitted from the gear transmission mechanism 10 to the cam member 17 via the gear portion 170a.

The driving force transmission apparatus and the four-wheel-drive vehicle according to the invention have been described on the basis of the above embodiment. However, the invention is not limited to the above-described embodiment. It is possible to implement the invention in various other embodiments without departing from the scope of the invention. For example, the following modifications may be made.
(1) In the above-described embodiment, each support pin 25 and the corresponding rolling member 19 are rotatable relative to each other. Therefore, the needle rollers 29 are used as rolling elements that are interposed between the support pin 25 and the rolling member 19. However, the invention is not limited to this configuration. Other rolling elements, such as balls, cylindrical rollers, long cylindrical rollers, tapered rollers, convex rollers and concave rollers, may be used as rolling elements other than the needle rollers 29.
(2) In the above-described embodiment, the description is made on the case where the speed reduction mechanism 9 is an eccentric oscillating-type speed reduction mechanism and, more specifically, the speed reduction mechanism 9 is an involute speed reduction mechanism with a small difference in the number of teeth. However, the invention is not limited to this configuration. For example, an eccentric oscillating-type speed reduction mechanism, such as a cycloid speed reduction mechanism, may be used, or a speed reduction mechanism other than an eccentric oscillating-type speed reduction mechanism may be used.
(3) In the above-described embodiment, the description is made on the case where the first cam thrust force Pi for reducing the clearance C between any adjacent clutch plates among the inner clutch plates 80 (first clutch plates) and the outer clutch plates (second clutch plates) 81 to, for example, 0 (C = 0) is generated. However, the invention is not limited to this configuration. A first cam thrust force for making the clearance between any adjacent two clutch plates among the inner clutch plates and the outer clutch plates smaller than that in an initial state may be generated.
(4) In the above-described embodiment, the description is made on the case where the invention is applied to the four-wheel-drive vehicle 200 in which the front wheels 204R, 204L are the main drive wheels and the rear wheels 205R, 205L are the auxiliary drive wheels. However, the invention is not limited to this configuration. The invention may be applied to a four-wheel-drive vehicle in which front wheels are auxiliary drive wheels and rear wheels are main drive wheels.

## Claims

1. A driving force transmission apparatus (1), comprising: a first rotary member (12) that is rotated by a main driving source (202);
a second rotary member (13) that is arranged on a rotation axis (0) of the first rotary member (12) so as to be rotatable relative to the first rotary member (12);
a clutch (8) that is interposed between the second rotary member (13) and the first rotary member (12), and that couples the first rotary member (12) and the second rotary member (13) to each other such that the first rotary member (12) and the second rotary member (13) are disengageable from each other; and
a cam mechanism (16) that converts rotational force output from an auxiliary driving source (5) into cam thrust force for applying clutch action force to the clutch (8), wherein
the cam mechanism (16) includes a cam member (17) that rotates upon reception of rotational force from the auxiliary driving source (5), rolling members (19) that roll on the cam member (17), and an output member (18) that outputs the cam thrust force toward the clutch (8) as the rolling members (19) roll,
**characterized in that**
the output member (18) is movable in a direction of the rotation axis (0) and is restricted in its rotation around the rotation axis (0), and restricts the rolling members' (19) movement in the direction of the rotation axis (0) and the rotation around the rotation axis (0) while retaining the rollingmembers (19) such that the rollingmembers (19) are rollable.

2. The driving force transmission apparatus (1) according to claim 1, wherein the output member (18) of the cam mechanism (16) is formed of an annular member having an accommodating space (18a) that accommodates the rolling members (19).

3. The driving force transmission apparatus (1) according to claim 1 or 2, wherein the output member (18) of the cam mechanism (16) has a plurality of guide insertion holes(22a) through which fixing guides (43) are passed along a moving direction of the output member, the guide insertion holes (43) being arranged at intervals in a circumferential direction.

4. The driving force transmission apparatus (1) according to any one of claims 1 to 3, wherein each rolling member (19) of the cam mechanism (16) is formed of a cylindrical roller having an axis that is perpendicular to an axis of the cam member.

5. The driving force transmission apparatus (1) according to any one of claims 1 to 4, wherein:
the clutch has a first clutch plate(80) and a second clutch plate(81) that are arranged next to each other in the direction of the rotation axis (0), that couple the first rotary member (12) and the second rotary member (13) to each other by being frictionally engaged with each other, and that disconnects the first rotary member (12) and the second rotary member (13) from each other by being disengaged from each other; and
the cam mechanism (16) is configured such that the cam thrust force includes a first cam thrust force (Pi) for reducing a clearance between the first clutch plate (80) and the second clutch plate (81) and a second cam thrust force (P2) for frictionally engaging the first clutch plate (80) and the second clutch plate (81) with each other, and the cam mechanism (16) converts rotational force from the auxiliary driving source into the first cam thrust force and the second cam thrust force.

6. The driving force transmission apparatus (1) according to any one of claims 1 to 5, wherein the cam member of the cam mechanism (16) is formed of an annular member that has a cam surface (173) on a rolling member side of the cam member (17), the cam surface (173) being formed of a recess (174) and a protrusion (175) that are arranged next to each other in a direction around the rotation axis (0).

7. The driving force transmission apparatus (1) according to claim 6, wherein, in the cam mechanism, a rolling member-side end face (175a, 175b) of the protrusion (175) is formed of a raceway surface of which a height in an axial direction (0) of the cam member (17) is gradually increased from the recess (175) along a circumferential direction of the cam member (17).

8. The driving force transmission apparatus (1) according to claim 7, wherein, when one of both circumferential end portions of the raceway surface of the cam member (17), which is close to the recess (175), is a starting end portion (175ai) and the other end portion that is on a side opposite to the starting end portion is a terminal end portion (175a2), the cam mechanism (16) outputs a first cam thrust force (Pi) from the output member (18) in a state where the rolling members (19) are located at the starting end portion (175ai), and outputs a second cam thrust force (P2) from the output member (18) in a state where the rolling member (19) is located between the starting end portion (175ai) and the terminal end portion (175a2).

9. The driving force transmission apparatus (1) according to any one of claims 1 to 8, wherein the cam member (17) of the cam mechanism (16) has a gear portion (170) that is in mesh with the auxiliary driving source (5) via a gear transmission mechanism (10).

10. The driving force transmission apparatus (1) according to claim 9, wherein a speed reduction mechanism (9) is an eccentric oscillating-type speed reduction mechanism that receives rotational force from the auxiliary driving source (5), that reduces a speed of rotation received from the auxiliary driving source (5), and that outputs the rotational force to the gear transmission mechanism (10).

11. The driving force transmission apparatus (1) according to claim 10, wherein
the speed reduction mechanism (9) includes:
a rotary shaft (90) that has an axis (O₁) that coincides with a rotation axis of the auxiliary driving source (5), and that has an eccentric portion (90a) having a central axis (O₂) that coincides with an axis that is parallel to the rotation axis (O);
an input member (91) that is formed of an external gear that has a center hole (91a) into which the eccentric portion (90a) of the rotary shaft (90) is fitted via a rolling bearing (97) and a plurality of through-holes (91b) arranged at equal intervals around an axis (O₁) of the center hole (91a);
a rotation force applying member (92) that is formed of an internal gear that is in mesh with the input member (91), and that has teeth the number of which is larger than the number of teeth of the external gear; and
output members (93) that receive rotation force, applied by the rotation force applying member (92), from the input member (91) and outputs the rotation force to the gear transmission mechanism (10), and that are passed through the through-holes (91b).

12. A four-wheel-drive vehicle (200), comprising:
a driving force transmission shaft (2) that transmits driving torque from a main drive wheel (204R, 204L) side toward an auxiliary drive wheel (205R, 205L);
a main drive wheel-side driving force transmission system (201A) that is arranged on the main drive wheel side of the driving force transmission shaft (2); and
an auxiliary drive wheel-side driving force transmission system (201B) that is arranged on the auxiliary drive wheel side of the driving force transmission shaft (2), wherein
the auxiliary drive wheel-side driving force transmission system (201B) includes an auxiliary drive wheel-side driving force interruption unit (1) that couples the driving force transmission shaft (2) and an auxiliary drive wheel-side member (213R) to each other such that the driving force transmission shaft (2) and the auxiliary drive wheel-side member (213R) are disengageable from each other,
**characterized in that**
the auxiliary drive wheel-side driving force interruption unit (1) is the driving force transmission apparatus according to any one of claims 1 to 11, and
the main drive wheel-side driving force transmission system (201A) includes a main drive wheel-side driving force interruption unit (3) that couples the driving force transmission shaft (2) and a main drive wheel-side member (212) to each other such that the driving force transmission shaft (2) and the main drive wheel-side member (212) are disengageable from each other.

## Patentansprüche

1. Antriebskraftübertragungsvorrichtung (1) mit: einem ersten drehenden Element (12), das durch eine Hauptantriebsquelle (202) gedreht wird;
einem zweiten drehenden Element (13), das an einer Drehachse (0) des ersten drehenden Elements (12) so angeordnet ist, dass es relativ zu dem ersten drehenden Element (12) drehbar ist;
einer Kupplung (8), die zwischen dem zweiten drehenden Element (13) und dem ersten drehenden Element (12) eingefügt ist, und die das erste drehende Element (12) und das zweite drehende Element (13) derart miteinander koppelt, dass das erste drehende Element (12) und das zweite drehende Element (13) voneinander lösbar sind; und
einem Nockenmechanismus (16), der eine von einer Hilfsantriebsquelle (5) abgegebene Drehkraft in eine Nockenschubkraft zum Anlegen einer Kupplungstätigkeitskraft an die Kupplung (8) umwandelt, wobei
der Nockenmechanismus (16) ein Nockenelement (17) hat, das aufgrund eines Empfangens einer Drehkraft von der Hilfsantriebsquelle (5) dreht, Wälzelemente (19), die auf dem Nockenelement (17) wälzen, und ein Abtriebselement (18), das die Nockenschubkraft zu der Kupplung (8) abgibt, wenn die Wälzelemente (19) sich wälzen,
**dadurch gekennzeichnet, dass**
das Abtriebselement (18) in eine Richtung der Drehachse (0) beweglich ist und in seiner Drehung um die Drehachse (0) beschränkt ist, und die Bewegung der Wälzelemente (19) in der Richtung der Drehachse (0) und die Drehung um die Drehachse (0) beschränkt, während die Wälzelemente (19) derart zurückgehalten sind, dass die Wälzelemente (19) wälzen können.

2. Antriebskraftübertragungsvorrichtung (1) nach Anspruch 1, wobei das Abtriebselement (18) des Nockenmechanismus (16) aus einem ringförmigen Element ausgebildet ist, das einen Aufnahmeraum (18a) aufweist, der die Wälzelemente (19) aufnimmt.

3. Antriebskraftübertragungsvorrichtung (1) nach Anspruch 1 oder 2, wobei das Abtriebselement (18) des Nockenmechanismus (16) eine Mehrzahl Führungseinfügebohrungen (22a) aufweist, durch die Befestigungsführungen (43) entlang einer Bewegungsrichtung des Abtriebselements durchgeführt sind, wobei die Führungseinfügebohrungen (43) in Abständen in einer Umfangsrichtung angeordnet sind.

4. Antriebskraftübertragungsvorrichtung (1) nach einem der Ansprüche 1 bis 3, wobei jedes Wälzelement (19) des Nockenmechanismus (16) aus einer zylindrischen Walze ausgebildet ist, die eine Achse aufweist, die rechtwinklig zu einer Achse des Nockenelements liegt.

5. Antriebskraftübertragungsvorrichtung (1) nach einem der Ansprüche 1 bis 4, wobei:
die Kupplung eine erste Kupplungsscheibe (80) und eine zweite Kupplungsscheibe (81) aufweist, die nebeneinander in der Richtung der Drehachse (0) angeordnet sind, die das erste drehende Element (12) und das zweite drehende Element (13) miteinander koppeln, indem sie miteinander in einem Reibeingriff sind, und das erste drehende Element (12) und das zweite drehende Element (13) voneinander trennen, indem sie sich voneinander lösen; und
der Nockenmechanismus (16) derart konfiguriert ist, dass die Nockenschubkraft eine erste Nockenschubkraft (Pi) zum Reduzieren eines Freiraums zwischen der ersten Kupplungsscheibe (80) und der zweiten Kupplungsscheibe (81) und eine zweite Nockenschubkraft (P2) zum reibend Einrücken der ersten Kupplungsscheibe (80) und der zweiten Kupplungsscheibe (81) miteinander hat, und der Nockenmechanismus (16) die Drehkraft von der Hilfsantriebsquelle in die erste Nockenschubkraft und die zweite Nockenschubkraft umwandelt.

6. Antriebskraftübertragungsvorrichtung (1) nach einem der Ansprüche 1 bis 5, wobei das Nockenelement des Nockenmechanismus (16) aus einem ringförmigen Element ausgebildet ist, das an einer Wälzelementseite des Nockenelements (17) eine Nockenoberfläche (173) aufweist, wobei die Nockenoberfläche (173) aus einer Aussparung (174) und einem Vorsprung (175) ausgebildet sind, die nebeneinander in einer Richtung um die Drehachse (0) angeordnet sind.

7. Antriebskraftübertragungsvorrichtung (1) nach Anspruch 6, wobei in dem Nockenmechanismus eine wälzelementseitige Endfläche (175a, 175b) des Vorsprungs (175) aus einer Laufringoberfläche ausgebildet ist, von der eine Höhe in einer axialen Richtung (0) des Nockenelements (17) von der Aussparung (175) entlang einer Umfangsrichtung des Nockenelements (17) allmählich erhöht wird.

8. Antriebskraftübertragungsvorrichtung (1) nach Anspruch 7, wobei, wenn einer der beiden Umfangsendabschnitte der Laufringoberfläche des Nockenelements (17), die nahe der Aussparung (175) liegt, ein Anfangsendabschnitt (175ai) ist, und der andere Endabschnitt, der an einer Seite gegenüber dem Anfangsendabschnitt liegt, ein Anschlussendabschnitt (175a2) ist, der Nockenmechanismus (16) in einem Zustand von dem Abtriebselement (18) eine erste Nockenschubkraft (Pi) abgibt, in dem die Wälzelemente (19) an dem Anfangsendabschnitt (175ai) angeordnet sind, und in einem Zustand eine zweite Nockenschubkraft (P2) von dem Abtriebselement (18) abgibt, in dem das Wälzelement (19) zwischen dem Anfangsendabschnitt (175ai) und dem Anschlussendabschnitt (175a2) angeordnet ist.

9. Antriebskraftübertragungsvorrichtung (1) nach einem der Ansprüche 1 bis 8, wobei das Nockenelement (17) des Nockenmechanismus (16) einen Zahnradabschnitt (170) aufweist, der mit der Hilfsantriebsquelle (5) über einen Zahnradübertragungsmechanismus (10) in Kämmeingriff ist.

10. Antriebskraftübertragungsvorrichtung (1) nach Anspruch 9, wobei ein Untersetzungsmechanismus (9) ein Untersetzungsmechanismus einer exzentrisch oszillierenden Art ist, der von der Hilfsantriebsquelle (5) eine Drehkraft empfängt, der eine Drehzahl einer Drehung untersetzt, die von der Hilfsantriebsquelle (5) empfangen wird, und die Drehkraft zu dem Zahnradübertragungsmechanismus (10) abgibt.

11. Antriebskraftübertragungsvorrichtung (1) nach Anspruch 10, wobei der Untersetzungsmechanismus (9) hat:
eine drehende Welle (90), die ein Achse (O₁) aufweist, die mit einer Drehachse der Hilfsantriebsquelle (5) zusammenfällt, und die einen exzentrischen Abschnitt (90a) aufweist, der eine Mittelachse (O₂) aufweist, der mit einer Achse zusammenfällt, die parallel zu der Drehachse (O) liegt;
ein Eingangselement (91), das aus einem Zahnrad mit Außenverzahnung ausgebildet ist, das eine Mittelbohrung (91a) aufweist, in die der exzentrische Abschnitt (90a) der drehenden Welle (90) über ein Wälzlager (97) eingepasst ist, und eine Mehrzahl Durchgangsbohrungen (91b), die in gleichen Abständen um eine Achse (O₁) der Mittelbohrung (91a) angeordnet ist;
einem Drehkraftanlegungselement (92), das aus einem Zahnrad mit Innenverzahnung ausgebildet ist, das mit dem Eingangselement (91) in Kämmeingriff ist, und das Zähne aufweist, deren Anzahl größer als die Anzahl der Zähne des Zahnrads mit Außenverzahnung ist; und
Abtriebselemente (93), die eine Drehkraft empfangen, die durch das Drehkraftanlegungselement (92) angelegt wird, von dem Eingangselement (91), und die Drehkraft zu dem Zahnradübertragungsmechanismus (10) abgibt, und die durch die Durchgangsbohrungen (91) durchgeführt sind.

12. Fahrzeug (200) mit Vierradantrieb, mit:
einer Antriebskraftübertragungswelle (2), die ein Antriebsmoment von einer Seite eines Hauptantriebsrads (204R, 204L) zu einem Hilfsantriebsrad (205R, 205L) überträgt;
einem hauptantriebsradseitigen Antriebskraftübertragungssystem (201A), das an der Hauptantriebsradseite der Antriebskraftübertragungswelle (2) angeordnet ist; und
einem hilfsantriebsradseitigen Antriebskraftübertragungssystem (201B), das an der Hilfsantriebsradseite der Antriebskraftübertragungswelle (2) angeordnet ist, wobei
das hilfsantriebsradseitige Antriebskraftübertragungssystem (201B) eine hilfsantriebsradseitige Antriebskraftunterbrechungseinheit (1) hat, die die Antriebskraftübertragungswelle (2) und ein hilfsantriebsradseitiges Element (213R) miteinander derart koppelt, dass die Antriebskraftübertragungswelle (2) und das hilfsantriebsradseitige Element (213R) voneinander gelöst werden können,
**dadurch gekennzeichnet, dass**
die hilfsantriebsradseitige Antriebskraftunterbrechungseinheit (1) die Antriebskraftübertragungsvorrichtung gemäß einem der Ansprüche 1 bis 11 ist, und
das hauptantriebsradseitige Antriebskraftübertragungssystem (201A) eine hauptantriebsradseitige Antriebskraftunterbrechungseinheit (3) hat, die die Antriebskraftübertragungswelle (2) und ein hauptantriebsradseitiges Element (212) miteinander derart koppelt, dass die Antriebskraftübertragungswelle (2) und das hauptantriebsradseitige Element (212) voneinander gelöst werden können.

## Revendications

1. Appareil de transmission de force d'entraînement (1) comprenant : un premier élément rotatif (12) qui est entraîné en rotation par une source d'entraînement principale (202) ;
un second élément rotatif (13) qui est agencé sur un axe de rotation (0) du premier élément rotatif (12) afin de pouvoir être entraîné en rotation par rapport au premier élément rotatif (12) ;
un embrayage (8) qui est intercalé entre le second élément rotatif (13) et le premier élément rotatif (12) et qui couple le premier élément rotatif (12) et le second élément rotatif (13) entre eux de sorte que le premier élément rotatif (12) et le second élément rotatif (13) se dégagent l'un de l'autre ; et
un mécanisme de came (16) qui convertit la force de rotation produite par une source d'entraînement auxiliaire (5) en force de poussée de came pour appliquer la force d'action d'embrayage sur l'embrayage (8), dans lequel :
le mécanisme de came (16) comprend un élément de came (17) qui tourne suite à la réception de la force de rotation de la source d'entraînement auxiliaire (5), des éléments de roulement (19) qui roulent sur l'élément de came (17) et un élément de sortie (18) qui amène la force de poussée de came vers l'embrayage (8) lorsque les éléments de roulement (19) roulent,
**caractérisé en ce que** :
l'élément de sortie (18) peut se déplacer dans une direction de l'axe de rotation (0) et est limité dans sa rotation autour de l'axe de rotation (0) et limite le déplacement des éléments de roulement (19) dans la direction de l'axe de rotation (0) et la rotation autour de l'axe de rotation (0) tout en retenant les éléments de roulement (19) de sorte que les éléments de roulement (19) peuvent rouler.

2. Appareil de transmission de force d'entraînement (1) selon la revendication 1, dans lequel l'élément de sortie (18) du mécanisme de came (16) est formé avec un élément annulaire ayant un espace de logement (18a) qui loge les éléments de roulement (19).

3. Appareil de transmission de force d'entraînement (1) selon la revendication 1 ou 2, dans lequel l'élément de sortie (18) du mécanisme de came (16) a une pluralité de trous d'insertion de guide (22a) à travers lesquels des guides de fixation (43) passent le long d'une direction de déplacement de l'élément de sortie, les trous d'insertion de guide (43) étant agencés à intervalles dans une direction circonférentielle.

4. Appareil de transmission de force d'entraînement (1) selon l'une quelconque des revendications 1 à 3, dans lequel chaque élément de roulement (19) du mécanisme de came (16) est formé avec un rouleau cylindrique ayant un axe qui est perpendiculaire à un axe de l'élément de came.

5. Appareil de transmission de force d'entraînement (1) selon l'une quelconque des revendications 1 à 4, dans lequel :
l'embrayage a un premier disque d'embrayage (80) et un second disque d'embrayage (81) qui sont agencés l'un à côté de l'autre dans la direction de l'axe de rotation (0) qui couplent le premier élément rotatif (12) et le second élément rotatif (13) entre eux en étant mis en prise par friction entre eux, et qui déconnectent le premier élément rotatif (12) et le second élément rotatif (13) l'un de l'autre en étant dégagés l'un de l'autre ; et
le mécanisme de came (16) est configuré de sorte que la force de poussée de came comprend une première force de poussée de came (Pi) pour réduire un jeu entre le premier disque d'embrayage (80) et le second disque d'embrayage (81) et une seconde force de poussée de came (P2) pour mettre en prise par friction le premier disque d'embrayage (80) et le second disque d'embrayage (81) entre eux, et le mécanisme de came (16) convertit la force de rotation de la source d'entraînement auxiliaire en première force de poussée de came et seconde force de poussée de came.

6. Appareil de transmission de force d'entraînement (1) selon l'une quelconque des revendications 1 à 5, dans lequel l'élément de came du mécanisme de came (16) est formé avec un élément annulaire qui a une surface de came (173) du côté de l'élément de roulement de l'élément de came (17), la surface de came (173) étant formée avec un évidement (174) et une saillie (175) qui sont agencés l'un à côté de l'autre dans une direction autour de l'axe de rotation (0).

7. Appareil de transmission de force d'entraînement (1) selon la revendication 6, dans lequel, dans le mécanisme de came, une face d'extrémité (175a, 175b) du côté de l'élément de roulement, de la saillie (175) est formée avec une surface de chemin de roulement dont une hauteur dans une direction axiale (0) de l'élément de came (17) est progressivement augmentée à partir de l'évidement (175) le long d'une direction circonférentielle de l'élément de came (17).

8. Appareil de transmission de force d'entraînement (1) selon la revendication 7, dans lequel, lorsque l'une des deux parties d'extrémité circonférentielles de la surface de chemin de roulement de l'élément de came (17), qui est à proximité de l'évidement (175), est une partie d'extrémité de début (175ai) et que l'autre partie d'extrémité qui est du côté opposé à la partie d'extrémité de début est une partie d'extrémité terminale (175a2), le mécanisme de came (16) produit une première force de poussée de came (Pi) à partir de l'élément de sortie (18) dans un état dans lequel les éléments de roulement (19) sont positionnés au niveau de la partie d'extrémité de début (175ai) et produit une seconde force de poussée de came (P2) à partir de l'élément de sortie (18) dans un état dans lequel l'élément de roulement (19) est positionné entre la partie d'extrémité de début (175ai) et la partie d'extrémité terminale (175a2).

9. Appareil de transmission de force d'entraînement (1) selon l'une quelconque des revendications 1 à 8, dans lequel l'élément de came (17) du mécanisme de came (16) a une partie d'engrenage (170) qui est en engrènement avec la source d'entraînement auxiliaire (5) via un mécanisme de transmission d'engrenage (10).

10. Appareil de transmission de force d'entraînement (1) selon la revendication 9, dans lequel un mécanisme de réduction de vitesse (9) est un mécanisme de réduction de vitesse excentrique de type oscillant qui reçoit la force de rotation de la source d'entraînement auxiliaire (5), qui réduit une vitesse de rotation reçue à partir de la source d'entraînement auxiliaire (5) et qui transmet la force de rotation au mécanisme de transmission d'engrenage (10).

11. Appareil de transmission de force d'entraînement (1) selon la revendication 10, dans lequel :
le mécanisme de réduction de vitesse (9) comprend :
un arbre de rotation (90) qui a un axe (O₁) qui coïncide avec un axe de rotation de la source d'entraînement auxiliaire (5) et qui a une partie excentrique (90a) ayant un axe central (O₂) qui coïncide avec un axe qui est parallèle à l'axe de rotation (O) ;
un élément d'entrée (91) qui est formé avec un engrenage externe qui a un trou central (91a) dans lequel la partie excentrique (90a) de l'arbre de rotation (90) est montée via un palier de roulement (97) et une pluralité de trous de passage (91b) agencés à intervalles égaux autour d'un axe (O₁) du trou central (91a) ;
un élément d'application de force de rotation (92) qui est formé avec un engrenage interne qui est en engrènement avec l'élément d'entrée (91) et qui a des dents dont le nombre est supérieur au nombre de dents de l'engrenage externe; et
des éléments de sortie (93) qui reçoivent la force de rotation, appliquée par l'élément d'application de force de rotation (92), à partir de l'élément d'entrée (91) et transmet la force de rotation au mécanisme de transmission d'engrenage (10), et qui passent par les trous de passage (91b).

12. Véhicule à quatre roues motrices (200) comprenant :
un arbre de transmission de force d'entraînement (2) qui transmet le couple d'entraînement d'un côté de la roue motrice principale (204R, 204L) vers une roue motrice auxiliaire (205R, 205L) ;
un système de transmission de force d'entraînement (201A) du côté de la roue motrice principale, qui est agencé du côté de la roue motrice principale de l'arbre de transmission de force d'entraînement (2) ; et
un système de transmission de force d'entraînement (201B) du côté de la roue motrice auxiliaire, qui est agencé du côté de la roue motrice auxiliaire de l'arbre de transmission de force d'entraînement (2), dans lequel :
le système de transmission de force d'entraînement (201B) du côté de la roue motrice auxiliaire comprend une unité d'interruption de force d'entraînement (1) du côté de la roue motrice auxiliaire qui couple l'arbre de transmission de force d'entraînement (2) et un élément (213R) du côté de la roue motrice auxiliaire l'un à l'autre de sorte que l'arbre de transmission de force d'entraînement (2) et l'élément (213R) du côté de la roue motrice auxiliaire peuvent se dégager l'un de l'autre,
**caractérisé en ce que**:
l'unité d'interruption de force d'entraînement (1) du côté de la roue motrice auxiliaire est l'appareil de transmission de force d'entraînement selon l'une quelconque des revendications 1 à 11, et
le système de transmission de force d'entraînement (201A) du coté de la roue motrice principale comprend une unité d'interruption de force d'entraînement (3) du côté de la roue motrice principale qui couple l'arbre de transmission de force d'entraînement (2) et un élément (212) du côté de la roue motrice principale entre eux de sorte que l'arbre de transmission de force d'entraînement (2) et l'élément (212) du côté de la roue motrice principale peuvent se dégager l'un de l'autre.
